# EUROPÄISCHE PATENTANMELDUNG

(11) **EP 1 126 346 A2**
(43) Veröffentlichungstag der Anmeldung: **22.08.2001**
(21) Anmeldenummer: 01100635.0
(22) Anmeldetag: 11.01.2001
(51) Int. Cl.: G05B 19/4061, B25J 9/16

(54) **Überwachungseinrichtung**

(30) Priorität: 17.01.2000 DE 10000954
(71) Anmelder: Middex-Electronic GmbH, 78582 Balgheim (DE)
(72) Erfinder: Ludwig, Rainer, 78582 Balgheim (DE)
(74) Vertreter: Hoeger, Stellrecht & Partner

(57) **Zusammenfassung**

Um eine Überwachungseinrichtung zur Überprüfung einer vorbestimmten Position eines Körpers oder zur Überprüfung der Anwesenheit eines Körpers, umfassend ein schwenkbar angeordnetes Prüfelement, einen Motor zum Antrieb des Prüfelements und eine Steuereinrichtung zur Steuerung und Regelung der Schwenkbewegung des Prüfelements so zu verbessern, daß sie universell einsetzbar ist und insbesondere eine zu hohe Kraftausübung auf einen Körper verhindert wird, wird vorgeschlagen, das Prüfelement ausgehend von einer Ausgangsposition durch einen Durchgangsbereich in einen Überwachungsbereich, in welchem die vorbestimmte Position des Körpers liegt oder in dem die Anwesenheit eines Körpers überwacht werden soll, schwenkbar auszubilden und durch die Steuereinrichtung das Drehmoment des Prüfelements so zu begrenzen, daß das maximal mögliche Drehmoment im Überwachungsbereich gegenüber dem Durchgangsbereich abgesenkt ist.

## Beschreibung

Die Erfindung betrifft eine Überwachungseinrichtung zur Überprüfung einer vorbestimmten Position eines Körpers oder zur Überprüfung der Anwesenheit eines Körpers, umfassend ein schwenkbar angeordnetes Prüfelement, einen Motor zum Antrieb des Prüfelements und eine Steuereinrichtung zur Steuerung und Regelung der Schwenkbewegung des Prüfelements.

Solche Überwachungseinrichtungen sind beispielsweise aus der DE 30 03 431 C2, der DE 43 10 872 A1 oder der DE 196 08 628 A1 bekannt.

Sie werden beispielsweise in Werkzeugmaschinen eingesetzt, um zu überprüfen, ob ein Werkzeug, wie beispielsweise ein Bohrer, noch an seiner vorbestimmten Position ist oder beispielsweise abgebrochen ist oder auch zu überprüfen, ob ein "Fremdkörper" in einen Bereich gelangt ist, in dem dieser eine Störung darstellt.

In der DE 30 03 431 C2 wird vorgeschlagen, eine Einstellung der Empfindlichkeit bzw. der Aufprallwucht einer Tastnadel, welche an dem Prüfelement sitzt, auf das zu überwachende Werkzeug oder Werkstück zu ermöglichen, indem die Drehgeschwindigkeit eines Gleichstrommotors und damit die Schwenkgeschwindigkeit der Tastnadel verändert wird.

Der Erfindung liegt die Aufgabe zugrunde, eine Überwachungseinrichtung der gattungsgemäßen Art ausgehend von dem Stand der Technik so zu verbessern, daß die Überwachungseinrichtung universell und auf einfache Weise einsetzbar ist und insbesondere so einsetzbar ist, daß bei schneller Ausführung einer Überwachungsoperation eine Beschädigung eines zu überwachenden Körpers weitgehend verhinderbar ist.

Diese Aufgabe wird bei einer Überwachungseinrichtung der eingangs beschriebenen Art erfindungsgemäß dadurch gelöst, daß das Prüfelement ausgehend von einer Ausgangsposition durch einen Durchgangsbereich in einen Überwachungsbereich, in welchem die vorbestimmte Position des Körpers liegt oder in dem die Anwesenheit eines Körpers überwacht werden soll, schwenkbar ist und daß die Steuereinrichtung das Drehmoment des Prüfelements so begrenzt, daß das maximal mögliche Drehmoment im Überwachungsbereich gegenüber dem Durchgangsbereich abgesenkt ist.

Durch das erfindungsgemäße Konzept ist einerseits gesichert, daß das Prüfelement schnell den Überwachungsbereich erreicht, d. h. mit hohem Drehmoment den Durchgangsbereich durchlaufen kann. Andererseits stößt im Überwachungsbereich das Prüfelement mit geringem Drehmoment an einen sich dort möglicherweise befindenden Körper, da das maximal mögliche Drehmoment abgesenkt ist. Das Prüfelement übt auf den Körper auch eine Kraft aus, wenn seine Geschwindigkeit Null ist, d. h. an dem Körper anliegt. Durch Reduzierung der Drehmomentbegrenzung wird erfindungsgemäß gewährleistet, daß diese Kraft nicht zu groß ist und insbesondere nicht eine Kraft übersteigt, die den Körper, wie beispielsweise ein Werkzeug, zerstören kann.

Es ist auch zu berücksichtigen, daß, wenn die Schwenkbewegung des Prüfelements durch einen Körper im Überwachungsbereich angehalten wird, die Steuerungseinrichtung versucht, diesem entgegenzuwirken, d. h. trotz Absenkung der Geschwindigkeit das Drehmoment kurz erhöht. Dadurch kann der Körper, an dem das Prüfelement ansteht, einer erhöhten Kraftbelastung ausgesetzt sein. Da die Regelung der Schwenkbewegung des Prüfelements eine gewisse Zeitkonstante hat, läßt sich solch ein kurzzeitiger Anstieg des Drehmoments in der Regel nicht verhindern. Durch die erfindungsgemäße Lösung, bei der eine obere Grenze für das Drehmoment in dem Überwachungsbereich vorgegeben ist, welche gegenüber der oberen Grenze im Durchgangsbereich abgesenkt ist, wird jedoch verhindert, daß das Drehmoment einen bestimmten Wert überschreitet und damit die Kraft auf dem Körper einen bestimmten Wert überschreitet.

An dem Prüfelement ist bevorzugterweise eine Tastnadel angeordnet. Durch unterschiedlich lange Tastnadeln wird das Drehmoment entsprechend verändert. Durch die erfindungsgemäße Lösung bleibt jedoch stets gesichert, daß das Drehmoment unabhängig von seinem aktuellen Wert nicht einen oberen Grenzwert überschreitet.

Weiterhin kann es erfindungsgemäß vorgesehen sein, daß zwischen dem Prüfelement und dem Gehäuse eine Dichtung angeordnet ist. Durch diese Dichtung wird ein Reibmoment ausgeübt, das dem Drehmoment einer Welle, welche vom Motor angetrieben ist, entgegenwirkt. Auch dadurch kann sich der absolute Wert des Drehmoments ändern. Erfindungsgemäß bleibt jedoch stets sichergestellt, daß eine obere Grenze des Drehmoments nicht überschritten wird.

Ganz besonders vorteilhaft ist es, wenn der Motor ein Gleichstrommotor ist und die Steuereinrichtung die Stromzufuhr zum Motor begrenzt. Über die Strombeaufschlagung des Motors wird das Drehmoment, das dieser ausüben kann, eingestellt. Ist die Stromzufuhr begrenzt, dann läßt sich auf einfache Weise das maximal erlaubte Drehmoment einstellen und insbesondere läßt sich durch Erniedrigung der Stromzufuhr im Überwachungsbereich das maximal erlaubte Drehmoment entsprechend absenken.

Ganz besonders günstig ist es, wenn die Schwenkbewegung des Prüfelements über eine kombinierte Positions-, Geschwindigkeits- und Drehmomenten-Steuerung und -Regelung kontrolliert wird. Dadurch läßt sich die Schwenkbewegung den Anforderungen anpassen, insbesondere läßt sich der Durchgangsbereich schnell durchfahren und in dem Überwachungsbereich die vorbestimmte Position eines Körpers überwachen, ohne daß eine Beschädigung oder gar Zerstörung des Körpers zu befürchten ist.

Günstigerweise ist beim Übergang des Prüfelements vom Durchgangsbereich in den Überwachungsbereich dessen Geschwindigkeit erniedrigbar, um so eine gute Überwachungssteuerung und -regelung in dem Überwachungsbereich zu erhalten.

Ganz besonders günstig ist es, wenn die Absenkung der Drehmömentbegrenzung nach Erniedrigung der Geschwindigkeit des Prüfelements erfolgt. Dadurch wird eine einerseits gewährleistet, daß die Geschwindigkeit des Prüfelements im Überwachungsbereich erniedrigt ist und insbesondere die Absenkung der Drehmomentenbegrenzung nicht die Absenkung der Geschwindigkeit auf einen vorbestimmten Wert behindert und andererseits bleibt trotzdem gewährleistet, daß das Prüfelement nicht mit einem zu großen Drehmoment gegen einen Körper im Überwachungsbereich stößt.

Ganz besonders vorteilhaft ist es, wenn die Steuereinrichtung einen digitalen Winkelgeber umfaßt. Bei diesem handelt es sich insbesondere um einen Inkrementengeber. Es läßt sich dann auf einfache Weise die Schwenkbewegung des Prüfelements steuern.

Günstig ist es, wenn der Durchgangsbereich einen Beschleunigungsbereich umfaßt, in dem ausgehend von der Ausgangsposition die Geschwindigkeit des Prüfelements erhöht wird. Es läßt sich dann insbesondere ausgehend von einer Ruhestellung des Prüfelements dessen Geschwindigkeit rasch erhöhen, um den Durchgangsbereich rasch durchlaufen zu können.

Weiterhin ist es vorteilhaft, wenn der Durchgangsbereich einen Abbremsbereich umfaßt, in dem die Geschwindigkeit des Prüfelements erniedrigt wird. Es läßt sich dann auf einfache Weise erreichen, daß in dem Überwachungsbereich das Prüfelement mit einer niedrigeren Geschwindigkeit verschwenkt wird als im Durchgangsbereich, um so ein hartes Anschlagen des Prüfelements an einen zu überwachenden Körper zu verhindern.

Günstigerweise ist zwischen einem Beschleunigungsbereich und Abbremsbereich des Durchgangsbereiches die Geschwindigkeit des Prüfelements im wesentlichen konstant gehalten. Dadurch ergeben sich verbesserte Steuerungs- und Regelungsmöglichkeiten, da in diesem Bereich der Schwenkwinkel proportional zur Zeit ist und es ergeben sich verbesserte Steuerungs- und Regelungsmöglichkeiten, da in diesem Bereich keine nichtlinearen Berechnungen durchgeführt werden müssen und bei einer Regelung aufgrund der linearen Beziehung zwischen Schwenkwinkel und Zeit ein verbessertes Einstellverhalten der Regelgröße gegeben ist.

Besonders vorteilhaft ist es auch, wenn die Geschwindigkeit des Prüfelements im Überwachungsbereich im wesentlichen konstant gehalten ist. Dies hat im wesentlichen die gleichen Gründe wie eben geschildert.

Für die Steuerung und Regelung der Schwenkbewegung ist es besonders günstig, wenn die Steuereinrichtung Geschwindigkeit und Drehmoment über die zeitabhängige Steuerung und Regelung der Position des Prüfelements durchführt. Die Position läßt sich über die Vorgaben des digitalen Winkelgebers direkt ermitteln und da in bestimmten Zeitintervallen um einen bestimmten Schwenkwinkel geschwenkt wird, lassen sich auch die Zeitinkremente auf einfache Weise bestimmen. Durch entsprechende Quotientenbildung läßt sich dann die Geschwindigkeit des Prüfelements zumindest näherungsweise ermitteln. Es ist dazu insbesondere vorteilhaft, wenn die Steuereinrichtung die Schwenkposition des Prüfelements vorgibt. Weiterhin ist es vorteilhaft, wenn die Steuereinrichtung die Schwenkgeschwindigkeit des Prüfelements vorgibt.

Ganz besonders vorteilhaft ist es, wenn die Steuereinrichtung Schwenkposition und Schwenkgeschwindigkeit des Prüfelements vorgibt. Bei einer alternativen Ausführungsform gibt die Steuereinrichtung die Beschleunigung des Prüfelements vor. Dazu muß dann über Integration die Geschwindigkeit und die Position des Prüfelements bestimmt werden. Durch Vorgabe der Schwenkposition und entsprechender Zeitintervalle läßt sich die Geschwindigkeit vorgeben und insbesondere rechnerisch über Quotientenbildung ermitteln. Ebenso läßt sich die Beschleunigung durch Quotientenbildung ermitteln.

Ganz besonders vorteilhaft ist es, wenn durch die Steuereinrichtung ein Lernzyklus zur Ermittlung des Überwachungsbereiches durchführbar ist. Durch einen solchen Lernzyklus läßt sich ermitteln, wo der Durchgangsbereich, durch den das Prüfelement schnell durchschwenkt werden soll, endet und wo der Überwachungsbereich, in dem die Drehmomentenbegrenzung abgesenkt ist, beginnen soll. Insbesondere müssen die entsprechenden Winkelwerte, die die beiden Bereiche voneinander trennen, nicht direkt eingegeben werden, sondern die erfindungsgemäße Überwachungseinrichtung ermittelt selber, wo die Grenzen liegen.

Günstigerweise ist durch die Steuereinrichtung der Überwachungsbereich so eingestellt, daß er um einen bestimmten Winkelbetrag vor einem im Lernzyklus detektierten Körper beginnt. Dieser Winkelbetrag kann beispielsweise 5° oder 10° sein. Es läßt sich dann eine optimale Aufteilung des gesamten Schwenkbereichs des Prüfelements erreichen, indem einerseits gewährleistet ist, daß das Prüfelement den Durchgangsbereich schnell durchläuft und andererseits in dem Überwachungsbereich, in dem die vorbestimmte Position des Körpers liegt oder in dem überwacht werden soll, ob ein "Fremdkörper" in ihm liegt, eine sichere Überwachung gewährleistet ist.

Günstigerweise sind Anschlagmittel vorgesehen, mittels denen die Schwenkung des Prüfelements begrenzbar ist. Dadurch läßt sich eine interne Referenzposition für die erfindungsgemäße Überwachungseinrichtung bereitstellen, die sich nicht verschieben kann.

Günstigerweise wird zum Setzen einer Referenzposition des Prüfelements dieses mit vorgegebener Geschwindigkeit in eine Anschlagposition gefahren, bei der korrespondierende Anschlagmittel sich berühren. Dadurch ist dann eine unveränderte Referenzposition bereitgestellt.

Günstigerweise werden zur Definition der Referenzposition des Prüfelements in der Anschlagposition mit geringem Drehmoment korrespondierende Anschlagmittel gegeneinander gedreht. Dadurch ist erreichbar, daß die Berührung, die zur Definition der Referenzposition erforderlich ist, auf definierte Weise erfolgt und sich so die Referenzposition genau festlegen läßt.

Die erfindungsgemäße Überwachungseinrichtung läßt sich bei "schwierigen" Arbeitsbedingungen einsetzen, wenn zwischen dem Prüfelement und einer Drehwelle, mittels welcher das Prüfelement angetrieben ist, eine Dichtung angeordnet ist.

Eine solche erfindungsgemäße Dichtung verhindert, daß Arbeitsfluide oder Späne oder andere Verunreinigungen in den Bereich zwischen Welle und Prüfelement und/oder Welle und Gehäuse eindringen können. Metallspäne beispielsweise können sich derart zwischen dem Gehäuse und dem Prüfelement verklemmen, daß die Drehung der Welle behindert wird. Durch solche Vorgänge wird der Betrieb der Überwachungseinrichtung gestört, d. h. kann ihrer eigentlichen Aufgabe, der Überprüfung einer vorbestimmten Position eines Körpers oder der Überprüfung der Anwesenheit eines Körpers, nicht nachkommen. Die erfindungsgemäß angeordnete Dichtung verhindert, daß insbesondere Metallspäne zu der Welle gelangen können. Zudem wird, da eine zusätzliche Dichtung vorgesehen ist, die Dichtigkeit des Gehäuses gegenüber dem Außenraum verbessert. Dadurch ist die erfindungsgemäße Überwachungseinrichtung weniger störanfällig und die Stillstandszeiten, bei denen der Betrieb der Überwachungseinrichtung gestört ist und diese somit ihrer eigentlichen Aufgabe nicht nachkommen kann, sind stark verringert. Auch können Metallspäne die Wellendurchtrittsdichtung im Gehäuse perforieren, so daß Flüssigkeit ins Gehäuseinnere dringen kann. Die erfindungsgemäß zusätzlich vorgesehene Dichtung verhindert, daß Metallspäne überhaupt zur Wellendurchtrittsdichtung gelangen können.

Ganz besonders vorteilhaft ist es, wenn die Dichtung an dem Prüfelement anliegt und an dem Gehäuse einliegt. Dadurch wird ein Eindringen von Spänen und/oder Flüssigkeiten in den Bereich zwischen Prüfelement und Welle und/oder Gehäuse und Welle verhindert.

Vorteilhafterweise ist die Dichtung symmetrisch um eine Achse und insbesondere um eine Drehachse der Drehwelle ausgebildet. Dadurch läßt sich insbesondere bei der Drehbewegung des Prüfelements ein im wesentlichen winkelunabhängiges Reibmoment erreichen, um so eine einfachere Steuerung und Regelung der Schwenkbewegung des Prüfelements zu erreichen.

Ganz besonders günstig ist es dann, wenn die Dichtung koaxial zur Welle zwischen dem Prüfelement und dem Gehäuse sitzt.

Günstigerweise ist zwischen Welle und Dichtung ein Zwischenraum gebildet. Dadurch liegt die Dichtung selber nicht an der Welle an und behindert deren Drehbewegung nicht.

Bei einer vorteilhaften Variante einer Ausführungsform ist es vorgesehen, daß die Dichtung drehfest gegenüber dem Prüfelement fixierbar ist. Bei der Schwenkbewegung des Prüfelements wird die Dichtung dann durch das Prüfelement mitgenommen, während sie relativ zu dem Gehäuse gedreht wird. Grundsätzlich ist es auch denkbar, die Dichtung drehfest gegenüber dem Gehäuse zu fixieren und das Prüfelement relativ zur Dichtung zu drehen. Die vorgeschlagene Variante ist jedoch konstruktiv günstiger, da um die Drehwelle im Gehäuse eine Dichtung vorgesehen werden muß, um den Durchtritt der Welle durch das Gehäuse abzudichten. Der entsprechende Ringraum steht für die Anordnung eines Halteelements für die Dichtung zwischen Prüfelement und Gehäuse nicht zur Verfügung. Für das Prüfelement selber muß dagegen keine weitere Dichtung neben der Dichtung zwischen dem Prüfelement und dem Gehäuse vorgesehen werden.

Günstigerweise weist das Prüfelement ein Halteelement für die Dichtung auf, auf das diese aufschiebbar ist, um sie drehfest an dem Prüfelement zu fixieren. Dadurch läßt sich auf eine einfache Weise eine leicht herstellbare, leicht lösbare und trotzdem dichte Verbindung zwischen der erfindungsgemäßen Dichtung und dem Prüfelement erreichen.

Fertigungstechnisch besonders günstig ist es, wenn das Halteelement durch einen Haltering gebildet ist, durch welchen die Welle geführt ist und auf den die Dichtung aufschiebbar ist. Dadurch läßt sich auf einfache Weise auch die Dichtung vollständig um die Welle anordnen.

Weiterhin ist günstigerweise zwischen dem Halteelement und dem Prüfelement eine ringförmige Ausnehmung zur Aufnahme der Dichtung gebildet. Durch eine solche ringförmige Ausnehmung wird eine Anlagefläche für eine Stirnfläche der Dichtung bereitgestellt und zusätzlich kann die Dichtung flächig um eine Außenfläche des Halterings anliegen. Dadurch steht die Dichtung mit einem großen Flächenbereich des Prüfelements in Verbindung, um eine hohe Dichtigkeit zu erzielen.

Günstigerweise entspricht dabei ein Außendurchmesser der Dichtung im wesentlichen dem Durchmesser des Prüfelements, so daß einerseits eine große Anlagefläche für die Dichtung am Prüfelement zur Verfügung steht und andererseits nicht unnötig Material verschwendet wird.

Ganz besonders günstig ist es, wenn die Dichtung eine Ringmanschette zum Aufschieben auf das Halteelement umfaßt. Durch eine solche Ringmanschette wird eine hohe Dichtigkeit zwischen der Dichtung und dem Prüfelement erreicht.

Weiterhin ist es ganz besonders vorteilhaft, wenn die Dichtung eine Manschette mit einer V-förmigen Dichtlippe umfaßt, welche am Gehäuse anliegt. Durch eine solche Dichtlippe wird eine hohe Dichtigkeit zwischen der Dichtung und dem Gehäuse erreicht, wobei über die Dichtlippe der Abstand zwischen dem Prüfelement und dem Gehäuse variierbar ist, ohne daß dafür eine Vielzahl von Dichtungen vorgesehen werden muß, denn über die V-förmige Dichtlippe läßt sich in einem bestimmten Rahmen eine axiale Höhe bezogen auf die Richtung der Drehachse einstellen.

Günstigerweise ist dabei die Manschette mit dem Prüfelement relativ zum Gehäuse drehbar.

Um einerseits eine gute Dichtigkeit zwischen der Dichtung und dem Gehäuse zu ermöglichen und andererseits den axialen Abstand zwischen dem Prüfelement und dem Gehäuse variieren zu können, weist die Manschette vorteilhafterweise eine zumindest bei fehlender Kraftbeaufschlagung in axialer Richtung im wesentlichen kegelstumpfförmige Außenfläche auf. Eine gedachte Kegelspitze der V-Manschette weist dabei zum Prüfelement hin. Dadurch kann, wenn der axiale Abstand zwischen dem Prüfelement und dem Gehäuse verringert wird, die Manschette in radialer Richtung ausweichen, so daß trotz Veränderung des Abstands die Dichtwirkung nicht verschlechtert wird.

Günstigerweise weist dabei die Manschette eine zumindest bei fehlender Kraftbeaufschlagung in axialer Richtung kegelstumpfförmige Innenfläche auf. Dies sorgt dafür, daß die Dichtlippe flächig am Gehäuse anliegt, auch wenn der Abstand zwischen Prüfelement und Gehäuse verringert wird, um so eine hohe Dichtwirkung zu erzielen.

Günstigerweise ist eine axiale Höhe der Dichtung über die Manschette variierbar, um so die erfindungsgemäße Überwachungseinrichtung variabel und insbesondere kostengünstig einsetzen zu können.

Weitere Merkmale und Vorteile der Erfindung sind Gegenstand der nachfolgenden Beschreibung sowie der zeichnerischen Darstellung des Ausführungsbeispiels.

In der Zeichnung zeigen:
- Figur 1: eine perspektivische Ansicht eines Tastkopfes der erfindungsgemäßen Überwachungseinrichtung;
- Figur 2: eine Seitenansicht einer Dichtung zwischen einem Prüfelement und einem Gehäuse des Tastkopfes, wobei kein axialer Druck auf diese Dichtung ausgeübt ist;
- Figur 3: die Dichtung gemäß Figur 2, wobei ein axialer Druck auf die Dichtung ausgeübt ist;
- Figur 4: ein Blockschaltbild einer Steuereinrichtung der erfindungsgemäßen Überwachungseinrichtung;
- Figur 5: eine schematische Darstellung des zeitlichen Verlaufs der Geschwindigkeit und des Drehmoments des Prüfelements in einem Durchgangsbereich und einem Überwachungsbereich und
- Figur 6: eine schematische Darstellung der Schwenkposition des Prüfelements in dem Durchgangsbereich und dem Überwachungsbereich.

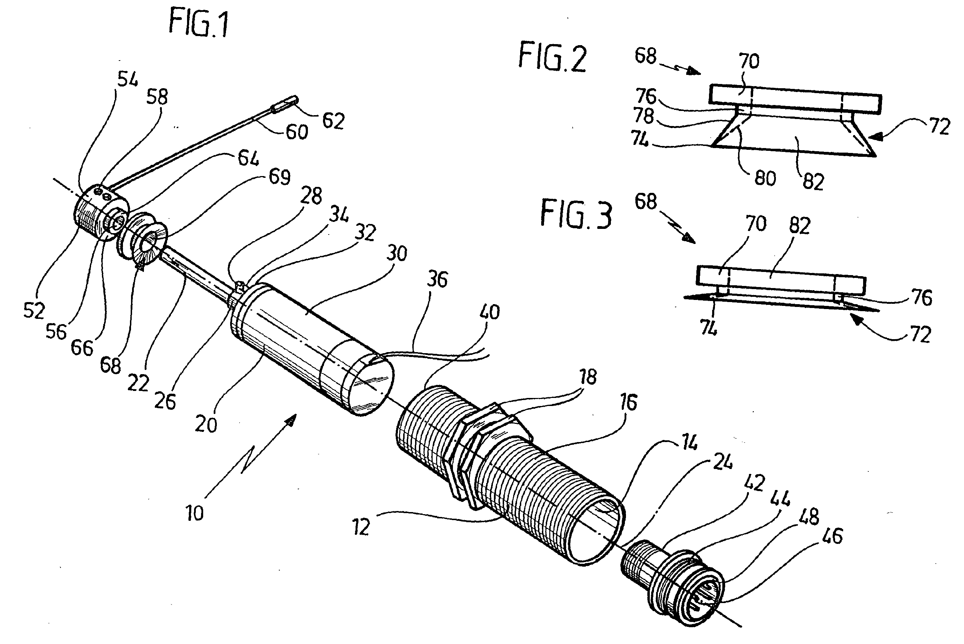

Ein Ausführungsbeispiel einer erfindungsgemäßen Überwachungseinrichtung umfaßt einen in Figur 1 perspektivisch gezeigten und als Ganzes mit 10 bezeichneten Tastkopf. Dieser hat ein zylindrisches Gehäuse 12 mit einem in seinem Inneren gebildeten Aufnahmeraum 14. Das Gehäuse 12 ist auf seiner Außenseite mit einem Außengewinde 16 versehen, auf das Muttern 18 aufschraubbar sind. Mit diesen Muttern 18 läßt sich die Überwachungseinrichtung beispielsweise in einer Werkzeugmaschine positionieren.

Der Aufnahmeraum 14 dient zur Aufnahme eines Elektromotors 20, bei dem es sich insbesondere um einen Gleichstrommotor handelt. Dieser Elektromotor 20 weist eine Drehwelle 22 auf, die koaxial zu einer Achse 24 des Gehäuses 12 angeordnet ist und damit die Drehachse der Welle 22 ist.

Es sind Anschlagmittel vorgesehen, die die Drehbewegung der Drehwelle 22 begrenzen. Bei dem in Figur 1 gezeigten Ausführungsbeispiel sitzt ein Ring 24 auf der Drehwelle 22, der mit einem radial nach außen weisenden Stift 26 versehen ist. Der Elektromotor 20 selber umfaßt ein Gehäuse 28 und an einer Stirnfläche 30 dieses Gehäuses 28, durch welche die Drehwelle 22 tritt, ist drehfest und damit auch drehfest gegenüber dem Gehäuse 12 der Überwachungseinrichtung 10 parallel zur Achse 24 beabstandet zu dieser ein weiterer Stift 34 angeordnet. Liegt der Stift 26 an dem Stift 34 an, so ist dadurch die Drehbewegung der Drehwelle 22 in Richtung des Stiftes 34 begrenzt.

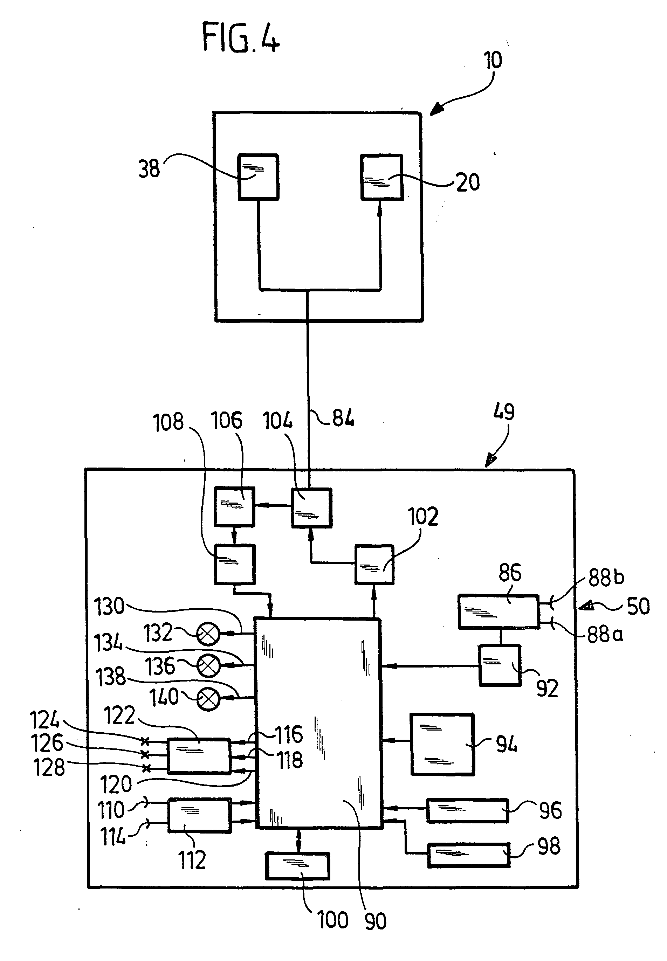

Der Elektromotor 20 ist mit Anschlußleitungen 36 versehen, die mit einem digitalen Winkelgeber 38 verbunden sind (siehe Figur 4) und von dort zu einem Steckverbinder führen. Der digitale Winkelgeber 38 ist bei dieser Variante einer Ausführungsform in dem Aufnahmeraum 14 angeordnet.

Das Gehäuse 12 des Tastkopfes 10 umfaßt eine Stirnfläche 40, welche mit einer Druchtrittsöffnung für die Drehwelle 22 des Elektromotors 20 versehen ist. In der Durchtrittsöffnung sitzt eine Dichtung, welche das Eindringen von Fremdkörpern oder Arbeitsflüssigkeiten in das Gehäuse 12 verhindert (in der Figur nicht gezeigt).

Der Aufnahmeraum 14 wird an dem der Stirnfläche 40 abgewandten Ende durch ein Verschlußelement 42, welches insbesondere als Verschlußstopfen ausgebildet ist, verschlossen. Das Verschlußelement 42 weist ein Innengewinde 44 auf, in das ein Steckverbinder 46, welcher mit elektrischen Anschlüssen 48 versehen ist, einschraubbar ist. Die Anschlußleitungen 36 sind dabei mit den elektrischen Anschlüssen 48 verbunden. Von dem Steckverbinder 46 führt ein Verbindungskabel 84 (Figur 4) zu einem in Figur 4 als Ganzes mit 49 bezeichneten Steuergerät Dieses Steuergerät nimmt zumindest teilweise eine Steuereinrichtung 50 zum Steuern und Regeln der Überwachungseinrichtung auf.

Auf der Drehwelle 22 sitzt ein Prüfelement 52, welches über die Drehwelle 20 schwenkbar ist. Dieses Prüfelement 52 umfaßt ein Zylinderelement 54, welches mit einer zentralen Ausnehmung 56 versehen ist, durch welche dieses Zylinderelement 54 auf die Drehwelle 22 aufsetzbar ist. Über Klemmschrauben 58 läßt sich das Zylinderelement an der Drehwelle 22 fixieren. An dem Zylinderelement 54 ist quer zur Drehachse 24 und insbesondere senkrecht zu dieser (d. h. in einer radialen Richtung) eine Tastnadel 60 mit einem Anschlagkörper 62 an ihrem vorderen Ende angeordnet. Bei einer Drehung der Drehwelle 22 wird dadurch diese Tastnadel 60 verschwenkt.

Das Zylinderelement 52 weist der Drehwelle 22 zugewandt um die Ausnehmung 56 ein ringförmiges Halteelement 64 auf, dessen Innendurchmesser im wesentlichen dem Durchmesser der Ausnehmung 56 entspricht und dessen Außendurchmesser gegenüber dem des Zylinderelements 54 verringert ist. Dadurch ist zwischen dem Haltering 64 und dem Zylinderelement 54 des Prüfelements 52 eine ringförmige Ausnehmung 66 gebildet.

Auf den Haltering 64 ist eine Dichtung 68 aufschiebbar, welche zwischen dem Gehäuse 12 und insbesondere dessen Stirnfläche 40 und dem Prüfelement 52 um die Drehwelle 22 angeordnet ist, um das Eindringen von Flüssigkeiten und Verunreinigungen, wie beispielsweise Säge- oder Bohrspäne, in den Bereich zwischen Prüfelement und Gehäuse 12 zu verhindern. Die Dichtung 68 liegt dafür sowohl an dem Zylinderelement 54 als auch an der Stirnfläche 40 des Gehäuses 12 an. Zwischen der Dichtung 68 und der Drehwelle 22 ist ein Zwischenraum 69 gebildet, so daß die Welle 22 nicht direkt an der Dichtung 68 anliegt.

Die Dichtung 68 umfaßt, wie in den Figuren 2 und 3 gezeigt, eine Ringmanschette 70, welche auf den Haltering 64 aufschiebbar ist. Der Außendurchmesser dieser Ringmanschette 70 entspricht im wesentlichen dem Außendurchmesser des Zylinderelements 74, und der Innendurchmesser entspricht im wesentlichen dem Außendurchmesser des Halterings 64, wobei er bevorzugterweise etwas kleiner gewählt wird, so daß die aufgeschobene Dichtung 68 kraftschlüssig drehfest an dem Haltering 64 gehalten ist.

Einstückig mit der Ringmanschette ist eine Manschette 72 verbunden, welche eine im Querschnitt V-förmige Dichtlippe 74 umfaßt. Es kann vorgesehen sein, daß zwischen der Manschette 72 und der Ringmanschette 70 ein Zwischenring 76 angeordnet ist.

Die Dichtlippe 74 weist, wenn die Dichtung axial nicht kraftbelastet ist, wie in Figur 2 gezeigt, eine im wesentlichen kegelstumpfförmige Außenfläche 78 auf, wobei die gedachte Kegelspitze in Richtung des Prüfelements 52 weist. Die Innenfläche 80 der Manschette 72 ist ebenfalls im wesentlichen kegelstumpfförmig ausgebildet, wobei der Kegelwinkel für die Innenfläche 80 kleiner ist als für die Außenfläche 78.

Durch eine solche Ausbildung läßt sich gewährleisten, daß die Dichtungswirkung zwischen dem Prüfelement 52 und dem Gehäuse 12 auch bei verschiedenen Abständen zwischen diesem Prüfelement 12 und der Stirnfläche 40 des Gehäuses 12 erreicht ist. Wie in Figur 3 gezeigt, läßt sich bei axialer Kraftausübung (d. h. bei Verschieben des Prüfelements 52 auf die Stirnfläche 40 des Gehäuses 12 zu) die Manschette 72 zusammendrücken und dadurch weicht die Dichtlippe 74 nach außen aus. Da diese an der Stirnfläche 40 anliegend bleibt, bleibt die Dichtwirkung erhalten, auch wenn der Abstand zwischen Prüfelement 52 und Gehäuse 12 variiert wird. Durch die kegelstumpfförmige Ausbildung der Innenfläche 80 bleibt die Dichtung 68 über einen von der Innenfläche 80 umfaßten Endbereich an der Stirnfläche 40 anliegend.

Bei einer Schwenkbewegung des Prüfelements relativ zum Gehäuse 12 dreht sich die Dichtung 68, die über den Haltering 64 drehfest an dem Prüfelement 52 gehalten ist, relativ zu dem Gehäuse 12. Die Drehwelle 22 legt vollständig in einem von der Ringmanschette 70 und der Manschette 72 umfaßten Innenraum 82 der Dichtung 68. Dies bedeutet, daß die Drehwelle 22 durch die Dichtung 68 gegenüber dem Außenraum abgeschlossen ist.

Das Steuergerät 49 ist, wie in Figur 4 gezeigt, über das Verbindungskabel 84 mit dem Tastkopf 10 verbunden. Über dieses Verbindungskabel 84 wird der Elektromotor mit elektrischer Energie versorgt. Weiterhin gibt die Steuereinheit 50 Steuerungs- und Regelungssignale an den digitalen Winkelgeber 38, der wiederum den Elektromotor 20 steuert.

Die Steuereinrichtung 50 umfaßt eine Stromversorgung 86, welche Anschlüsse 88a, 88b für eine Energiequelle aufweist. Beispielsweise ist es vorgesehen, zwischen den Anschlüssen 88a und 88b eine Spannung von 24 V anzulegen. Zwischen der Stromversorgung und einem Mikrocontroller 90 ist ein EMV-Filter 92 angeordnet, um elektromagnetische Verzerrungen abzufangen bzw. auszugleichen.

Weiterhin ist ein Schalter und insbesondere Drehschalter 94 für einen Schwenkwinkel des Prüfelements 52 vorgesehen, welcher mit einem Eingang des Mikrocontrollers 90 verbunden ist. (In Figur 4 sind Eingänge des Mikrocontrollers 90 mit Pfeilen zu diesem und Ausgänge mit Pfeilen weg von diesem angedeutet.) Über diesen Drehschalter läßt sich ein Schwenkwinkel des Prüfelements 52 vorgeben.

Ein weiterer Eingang des Mikrocontrollers 90 ist mit einem Umschalter 96 versehen, mittels dem zwischen einer Werkzeugüberwachungsoperation zur Überprüfung einer vorbestimmten Position eines Körpers oder einer Freiraumüberwachungsoperation zur Überprüfung der Anwesenheit eines Körpers schaltbar ist.

Über einen weiteren Umschalter 98 läßt sich eine Schwenkrichtung im Uhrzeigersinn oder im Gegenuhrzeigersinn schalten.

Der Mikrocontroller 90 ist ferner mit einem nicht flüchtigen Speicher 100, beispielsweise einem EEPROM verbunden, in welchem insbesondere bestimmte Schwenkstellungen des Prüfelements 52 speicherbar sind, so daß der Mikrocontroller bei der Operation der erfindungsgemäßen Überwachungseinrichtung darauf zurückgreifen kann.

Ein Ausgang des Mikrocontrollers 90 ist mit einem Motortreiber 102 für den Elektromotor 20 verbunden. Dabei sitzt zwischen dem Motortreiber 102 und dem Elektromotor 20 ein EMV-Filter 104 zum Abfangen bzw. Ausgleichen von elektromagnetischen Verzerrungen. Über das Verbindungskabel 84 ist der Elektromotor 20 mit dem EMV-Filter 104 verbunden.

Der digitale Winkelgeber 38 ist über dieses EMV-Filter 104 mit einem Meßumformer 106 verbunden, welcher wiederum über ein Filter 108 mit dem Mikrocontroller 90 verbunden ist. Dadurch kann der Mikrocontroller 90 die Signale des digitalen Winkelgebers 38, die an den Elektromotor 20 übermittelt werden, auswerten und insbesondere dadurch die momentane Position, Geschwindigkeit und Beschleunigung des Prüfelements 52 ermitteln.

Der Mikrocontroller 90 weist einen Eingang 110 "Start" auf, bei dessen Signalbeaufschlagung die Überwachungsoperation in Gang gesetzt wird. Zwischen diesem Eingang 110 und dem Mikrocontroller ist dabei ein Eingangsschutz 112 angeordnet, um Eingangssignale, die zu einer Zerstörung des Mikrocontrollers führen können, abzufangen.

Weiterhin ist ein Eingang 114 "Lernen" vorgesehen, welcher ebenfalls über den Eingangsschutz 112 mit dem Mikrocontroller 90 verbunden ist. Bei Signalbeaufschlagung dieses Eingangs 114 wird ein Lernzyklus in Gang gesetzt, bei dem das Prüfelement 52 die vorbestimmte Position eines Körpers (Werkzeugüberwachung) lernt.

Der Mikrocontroller 90 weist weiterhin drei Ausgänge 116, 118, 120 auf, die mit einem Ausgangstreiber 122 verbunden sind, an dem die Ausgangssignale der Überwachungseinrichtung abgreifbar sind. An einem ersten Ausgang 124 "OK" dieses Ausgangstreibers 122 ist dabei ein Signal abgreifbar, das anzeigt, daß der Überwachungsvorgang ordnungsgemäß durchgeführt wurde und keine Störungen festgestellt wurden (d. h. bei der Werkzeugüberwachung der Körper an seiner vorbestimmten Position detektiert wurde oder bei der Freiraumüberwachung kein Körper im Überwachungsbereich detektiert wurde).

An einem zweiten Ausgang 126 "nOK" ist ein Signal abgreifbar, das anzeigt, daß der Überwachungsvorgang ordnungsgemäß verlaufen ist, jedoch eine Störung detektiert wurde, d. h. daß entweder der Körper nicht in seiner vorbestimmten Position ist (Werkzeugüberwachung) oder die Anwesenheit eines Körpers im Überwachungsbereich detektiert wurde (Freiraumüberwachung).

Der Ausgangstreiber 152 weist einen dritten Ausgang 128 "FAULT" auf, der anzeigt, daß der Überwachungsvorgang nicht ordnungsgemäß erfolgt ist. Die Ursache dafür kann beispielsweise sein, daß Verunreinigungen wie Späne zu einer Störung der Drehbewegung der Welle 22 geführt haben. Es können auch eine Vielzahl von anderen Gründen zu einer Störung der Überwachungsoperation führen.

Um das Überwachungsergebnis auch optisch anzuzeigen, weist der Mikrocontroller 90 einen Ausgang 130 auf, der mit einer LED 132 verbunden ist, die grün leuchtet, wenn der Überwachungsvorgang erfolgreich abgelaufen ist und keine Störungen detektiert wurden. Es ist ein weiterer Anschluß 134 vorgesehen, der mit einer LED 136 verbunden ist, die ein rotes Licht abgibt, wenn der Überwachungsvorgang erfolgreich abgelaufen ist, jedoch eine Störung in dem Sinne detektiert wurde, daß der Körper nicht an seiner vorbestimmten Position ist (Werkzeugüberwachung) oder daß in dem Überwachungsbereich ein Körper anwesend ist (Freiraumüberwachung). Ein Anschluß 138 ist mit einer LED 140 verbunden, die ein optisches Signal (beispielsweise gelbes Licht) abgibt, wenn durch die Steuereinrichtung 50 festgestellt wird, daß ein Fehler während des Überwachungsvorgangs aufgetreten ist.

Der Betrieb der erfindungsgemäßen Überwachungseinrichtung läuft wie folgt:

Nach Einschalten der Steuereinrichtung 50 wird die Drehwelle langsam gedreht, bis die Anschlagmittel 28 und 34 aneinanderliegen, d. h. die Stifte 28 und 34 aneinander stoßen. Dadurch wird eine Referenzposition gesetzt. Es wird dann mit einem geringen Drehmoment der Stift 28 gegen den Stift 34 gedrückt, um so nochmals die Nullposition zu setzen. Der Mikrocontroller 90 liest dann die Stellungen der Schalter 94, 96 und 98. Bei einer falschen oder ungeeigneten Schalterstellung des Drehschalters 94 (beispielsweise Schwenkwinkel 0°) wird der Schritt des Drückens mit geringem Drehmoment des Stiftes 28 gegen den Stift 34 und ein Einlesen der Schalterstellungen wiederholt. Bei einer geeigneten Stellung des Drehschalters 94 wird geprüft, ob über den Schalter 96 der Modus Werkzeugüberwachung (Detektion eines Körpers an einer vorbestimmten Position) oder der Modus Freiraumüberwachung (Detektion eines Körpers in einem Überwachungsbereich) über den Schalter 96 eingestellt ist. Im Falle, daß der Modus "Freiraumüberwachung" eingestellt ist, wird ein entsprechender Starteingang abgefragt. Im Falle, daß der Modus "Werkzeugüberwachung" eingestellt ist, wird der Eingang 114 "Lernen" abgefragt und gegebenenfalls ein Lernvorgang durchgeführt. Bei erfolgreichem Lernvorgang wird dann der Eingang 110 "Start" für die Werkzeugüberwachung abgefragt und entsprechend eine Werkzeugüberwachungsoperation durchgeführt. Ergibt die Abfrage, daß der Lernvorgang nicht erfolgreich war, wird in den Schritt, bei dem die Stifte 28 und 34 mit geringem Drehmoment gegeneinander gedrückt werden, um die Referenzposition zu setzen, gesprungen und die entsprechenden oben erwähnten nachfolgenden Schritte werden abgearbeitet.

Ein Lernzyklus läuft wie folgt ab:

Der Mikrocontroller 90 prüft zuerst, ob der Eingang 114 "Lernen" aktiv ist. Im positiven Falle wird dann nochmals der über den Drehschalter 94 eingestellte Schwenkwinkel geprüft. Ist als Schwenkwinkel 0° eingestellt, so ist kein Lernen möglich. Es wird dann die Hindernisposition 0° in dem Speicher 100 gespeichert und das Prüfelement langsam in seine Ausgangsposition (Referenzposition) zurückgeschwenkt.

Bei einer Schwenkwinkeleinstellung ungleich 0° wird dann das Prüfelement mit langsamer Geschwindigkeit auf den über den Drehschalter 94 eingestellten Winkel verschwenkt, und unter Zwischenschaltung eines Zeitverzögerungsschrittes wird geprüft, ob das Prüfelement mit der Tastnadel 60 einen Positionsschalter erreicht hat, der das Ende eines Überwachungsbereiches anzeigt. Wird detektiert, daß dieser Positionsschalter erreicht ist, dann bedeutet dies, daß kein Hindernis im eingestellten Bereich war und damit auch keine Hindernisposition gelernt werden konnte. Es wird dann als Hindernisposition Null in dem Speicher 100 gespeichert und das Prüfelement langsam in die Referenzposition zurückgeschwenkt.

Wird bei der Prüfung, ob das Prüfelement 52 den Positionsschalter erreicht hat, festgestellt, daß das Prüfelement außerhalb eines zulässigen Bereiches verschwenkt wurde (aus diesem Grund wird der Zeitverzögerungsschritt zwischengeschaltet), dann bedeutet dies, daß das Hindernis außerhalb des zulässigen Bereichs liegt. Es wird dann die Hindernisposition Null in dem Speicher 100 gespeichert und das Prüfelement 52 langsam auf die Referenzposition zurückgeschwenkt.

Im positiven Falle, daß das Prüfelement 52 im zulässigen Bereich liegt, war der Lernvorgang erfolgreich und die momentane Position des Prüfelements 52 stellt die Hindernisposition dar, d. h. die vorbestimmte Position des Körpers. Es wird danach ebenfalls das Prüfelement 52 langsam in die Referenzposition zurückgeschwenkt.

Die Werkzeugüberwachung läuft nun wie folgt ab:

Es wird zuerst geprüft, ob der Eingang 110 "Start" aktiv ist. Es werden dann alle LEDs 132, 136 und 140 und die Ausgänge 124, 126 und 128 ausgeschaltet. Daraufhin wird geprüft, ob als gelernte Position in dem Speicher 100 0° gespeichert ist. Ist dies der Fall, dann bedeutet dies, daß keine Abtastung möglich ist, da die Position nicht erfolgreich gelernt wurde und deshalb keine Abtastung durchgeführt wird. Die Ausgänge 126 "nOK" und 128 "Fault" werden signalbeaufschlagt.

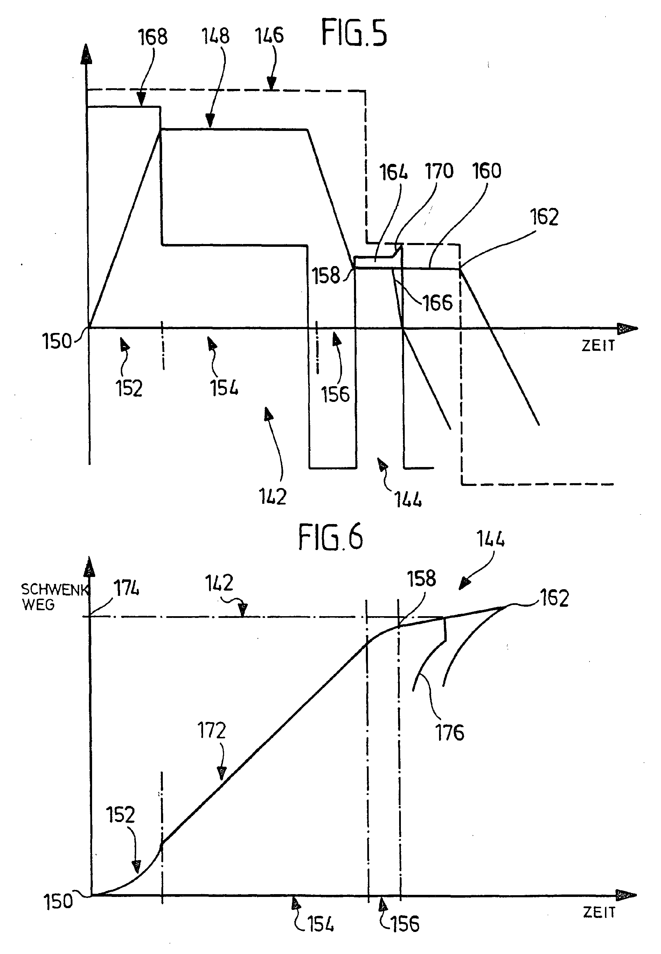

Im Falle, daß eine gelernte Position ungleich 0° ermittelt wurde, wird das Prüfelement 52 durch einen Durchgangsbereich 142 (Figuren 5 und 6) geschwenkt und geprüft, ob eine bestimmte Höchstzeit abgelaufen ist. Im Falle, daß diese Höchstzeit abgelaufen ist, werden die LEDs 136 und 140 eingeschaltet, das Prüfelement 52 mit hoher Geschwindigkeit auf seine Referenzposition zurückgefahren und die Ausgänge 126 und 128 signalbeaufschlagt. Das Ablaufen des Zeitlimits kann insbesondere dadurch verursacht sein, daß Wickelspäne die Bewegung der Tastnadel 60 behindern oder blockieren.

Im Falle, daß registriert wird, daß das Zeitlimit noch nicht abgelaufen ist, wird das Prüfelement in einen Überwachungsbereich 144 verschwenkt. Es wird dann nochmals geprüft, ob ein Zeitlimit abgelaufen ist. Ist dies der Fall, dann ist eine Störung der Überwachungseinrichtung eingetreten und entsprechend werden wieder die LEDs 136 und 140 eingeschaltet und die Ausgänge 126 und 128 signalbeaufschlagt. Ist dieses Zeitlimit nicht abgelaufen, dann wird der ganze Überwachungsbereich durchfahren und am Ende des Überwachungsbereiches geprüft, ob sich das Prüfelement noch im zulässigen Schwenkwinkelbereich befindet. Ist dies nicht der Fall, dann ist dies darauf zurückzuführen, daß sich ein Körper nicht im Überwachungsbereich befindet. Es wird dann die LED 136 "NOK" eingeschaltet, das Prüfelement 52 mit hoher Geschwindigkeit in seine Referenzposition zurückverschwenkt und der Ausgang 126 "nOK" signalbeaufschlagt. Der Ausgang 128 "FAULT" wird nicht signalbeaufschlagt, da der Überwachungsvorgang ordnungsgemäß erfolgt ist, aber kein Körper im Überwachungsbereich 144 detektiert wurde.

Im Falle, daß sich das Prüfelement 52 in einem zulässigen Schwenkwinkelbereich befindet, wird die LED 132 eingeschaltet und der Ausgang 124 "OK" signalbeaufschlagt, wobei die Ausgänge 126 und 128 nicht signalbeaufschlagt werden.

Das Durchfahren des Durchgangsbereichs 142 und des Überwachungsbereichs 144 wird unten stehend näher erläutert.

Wurde über den Umschalter 96 die Freiraumüberwachung eingestellt, d. h. die Überprüfung, ob ein Körper in dem Überwachungsbereich anwesend ist, dann wird wiederum zuerst geprüft, ob der Eingang "START" 110 aktiv ist. Im positiven Falle werden die LEDs 132, 136 und 140 und die Ausgänge 124, 126 und 128 ausgeschaltet. Ist die über den Drehschalter eingestellte Schwenkwinkelposition 0°, dann ist keine Überwachung möglich und die LEDs 132, 136 und 140 bleiben ausgeschaltet. Es wird dann das Prüfelement 52 auf seine Referenzposition zurückverschwenkt, sofern es dort nicht bereits ist und der Ausgang 128 "FAULT" signalbeaufschlagt.

Ist die eingestellte Position verschieden von 0°, dann durchfährt das Prüfelement 52 den Durchgangsbereich 142 und den Überwachungsbereich 144, wie unten näher erläutert, und es wird geprüft, ob das Prüfelement 52 noch im zulässigen Bereich ist. Ist dies nicht der Fall, dann bedeutet dies, daß ein Körper im Überwachungsbereich 144 anwesend ist und die LED 132 "OK" bleibt ausgeschaltet, während die LED 136 "nOK" eingeschaltet wird. Es wird dann das Prüfelement in seine Referenzposition zurückverschwenkt, und der Ausgang 126 "nOK" signalbeaufschlagt, während die beiden anderen Ausgänge 124 und 128 keine Signalbeaufschlagung erhalten.

Ist dagegen das Prüfelement 52 im zulässigen Bereich, dann bedeutet dies, daß im Überwachungsbereich 144 kein Körper anwesend war. Es wird daher die LED 132 eingeschaltet, das Prüfelement in seine Referenzposition zurückverschwenkt und der Ausgang 124 "OK" signalbeaufschlagt, während die Ausgänge 126 und 128 nicht signalbeaufschlagt werden.

Die Steuerungseinrichtung 50 steuert und regelt über den Mikrocontroller 90 und den digitalen Winkelgeber 38 die Position, Schwenkgeschwindigkeit und das Drehmoment des Prüfelements 52 mit der Tastnadel 60. Dazu wird der Motorstrom des Elektromotors 20 gesteuert und geregelt, um dessen Drehmoment zu steuern und zu regeln, und es wird die Spannungsbeaufschlagung des Elektromotors 20 gesteuert und geregelt, um mittels des digitalen Winkelgebers 38 die Drehung der Drehwelle 22 zu steuern und zu regeln. Es kann dabei insbesondere vorgesehen sein, daß der Mikrocontroller 90 ein pulsbreitenmoduliertes Signal erzeugt, welches sowohl Informationen über die Positionssteuerung/-regelung als auch Momentensteuerung/-regelung enthält.

Der Durchgangsbereich 142 dient im wesentlichen dazu, das Prüfelement 52 ausgehend von einer Ausgangsposition (Referenzposition) schnell in den Überwachungsbereich 144 zu bringen. Der eigentliche Detektionsvorgang zur Überprüfung der vorbestimmten Position eines Körpers oder der Überprüfung der Anwesenheit eines Körpers findet in dem Überwachungsbereich 144 statt.

Das Drehmoment des Elektromotors 20, mit dem dieser über die Drehwelle 22 auf das Prüfelement 52 wirkt, ist durch die Strombeaufschlagung dieses Gleichstrommotors bestimmt. Der Mikrocontroller 90 stellt die Strombeaufschlagung so ein, daß das maximal mögliche Drehmoment 146, welches das Drehmoment des Prüfelements 52 begrenzt und welches in Figur 5 mit gestrichelten Linien skizziert ist, im Überwachungsbereich 144 gegenüber dem Durchgangsbereich 142 abgesenkt ist. Dadurch läßt sich verhindern, daß die Tastnadel 60 des Prüfelements 52 mit hohem Drehmoment an einen zu detektierenden Körper anschlägt oder eine entsprechend hohe Kraft auf diesen ausübt, wenn er im Schwenkweg der Tastnadel 60 steht.

In Figur 5 ist schematisch ein Geschwindigkeitsverlauf 148 für die Schwenkgeschwindigkeit des Prüfelements 52 gezeigt. Ausgehend von der Referenzposition 150 umfaßt der Durchgangsbereich 142 einen Beschleunigungsbereich 152, in dem das Prüfelement beschleunigt wird, d. h. dessen Geschwindigkeit von Null aus bis zu einem im wesentlichen konstanten Wert erhöht wird. In einem auf diesen Beschleunigungsbereich folgenden Bereich 154 wird die Geschwindigkeit im wesentlichen konstant gehalten, und in einem Abbremsbereich 156 wird die Geschwindigkeit auf einen niedrigeren Wert als dem in dem Bereich 154 verringert, d. h. das Prüfelement 52 wird abgebremst. An den Abbremsbereich 156 schließt sich der Überwachungsbereich 144 an. Der Übergang 158 zwischen dem Abbremsbereich 156 und dem Überwachungsbereich 144 liegt dabei bei einer vorgegebenen Winkelposition vor der vorbestimmten Position des Körpers (bei der Werkzeugüberwachung), beispielsweise um einen Winkelbereich von 10° vor dieser vorbestimmten Position.

Die Drehmomentbegrenzung wird beim Übergang vom Abbremsbereich 156 in den Überwachungsbereich 144 erniedrigt und bevorzugterweise in einem kleinen Zeitabstand nach dem Übergang 158. Dadurch ist gewährleistet, daß ein genügend großes Drehmoment vorhanden ist, um das Prüfelement 52 in dem Überwachungsbereich 144 mit einer im wesentlichen konstanten niedrigeren Geschwindigkeit zu verschwenken; andererseits wird dadurch auch gewährleistet, daß im wesentlichen im größten Teil des Überwachungsbereichs 144 das maximal mögliche Drehmoment 146 gegenüber demjenigen im Durchgangsbereich 142 abgesenkt ist.

Das Prüfelement 52 durchschwenkt den Überwachungsbereich 144 vollständig mit im wesentlichen konstanter Geschwindigkeit, wie durch das Kurvenstück 160 in Figur 5 angedeutet, wenn kein Körper im Überwachungsbereich 144 liegt. Ist das Ende 162 des Überwachungsbereiches 144 erreicht, dann schwenkt das Prüfelement 52 schnell zurück in die Referenzposition 150, wobei das Prüfelement zur Umkehrung der Drehrichtung abgebremst und in die Gegenrichtung beschleunigt wird.

Liegt ein Körper im Überwachungsbereich 144, dann wird innerhalb kurzer Zeit das Prüfelement 52 von seiner im wesentlichen konstanten Geschwindigkeit 164 auf Null abgebremst, wie es in dem Kurvenstück 166 angedeutet ist. Danach kann das Prüfelement 52 schnell in die Referenzposition 150 zurückschwenken.

Der Drehmomentverlauf ist in Figur 5 über die Kurve 168 dargestellt. In dem Beschleunigungsbereich 152 wird ein hohes Drehmoment ausgeübt, welches unterhalb des maximalen Drehmoments 146 liegt, um ausgehend von der Referenzposition 150 das Prüfelement auf eine konstante Geschwindigkeit zu beschleunigen. Dieses Drehmoment ist dabei höher als das über die Dichtung 68 ausgeübte Reibmoment, um eine Nettobeschleunigung zu erreichen.

Beim Übergang in den Bereich 154 wird das Motordrehmoment erniedrigt, indem der Motorstrom entsprechend erniedrigt wird, um eine konstante Geschwindigkeit des Prüfelements 52 zu erreichen. Das Drehmoment entspricht dann im wesentlichen dem Reibmoment. In dem Abbremsbereich 156 wird das Drehmoment umgekehrt, um eben das Prüfelement 52 abzubremsen. Die Umkehrung erfolgt im wesentlichen nur in dem Abbremsbereich 156. Beim Übergang 148 wird das Drehmoment wieder erhöht und bei einem Wert festgehalten, der etwas niedriger ist als der im Bereich 154.

Erreicht das Prüfelement 52 den Körper, dann steigt das Drehmoment an, da der Mikrocontroller 90 eine Verlangsamung des Prüfelements registriert und dies auszugleichen versucht. Dieser Anstieg, welcher in Figur 5 mit 170 angedeutet ist, ist unter anderem darauf zurückzuführen, daß die Steuerungs- und Regelungsvorgänge nicht instantan erfolgen, sondern eine gewisse Einschwingzeit benötigen. Durch das erfindungsgemäße Vorsehen einer Drehmomentbegrenzung, wobei diese in dem Überwachungsbereich 144 abgesenkt ist, wird jedoch verhindert, daß das Drehmoment des Prüfelements 52 trotz des Anstiegs 170 über seinen maximal erlaubten Wert hinausgeht.

In Verbindung mit dem Abfall 166 der Geschwindigkeit auf Null und/oder des Anstiegs des Drehmoments wird dann von dem Mikrocontroller 90 ein Steuerungs- und Regelungssignal ausgegeben, gemäß dem die Drehmomentrichtung umgekehrt wird, um das Prüfelement 52 schnell in die Referenzposition 150 zurückzuschwenken.

In dem Falle, daß in dem Überwachungsbereich 144 kein Körper vorhanden ist, an den die Tastnadel 60 anschlagen kann, wird das konstante Drehmoment bis zum Ende 162 des Überwachungsbereiches aufrechterhalten, um eine im wesentlichen konstante Geschwindigkeit des Prüfelements 52 zu erzielen, und am Ende 162 des Überwachungsbereiches wird das Drehmoment umgekehrt, um das Prüfelement 52 schnell wieder zurück in die Referenzposition 150 zu führen (dies ist in Figur 5 nicht gezeigt).

In Figur 6 ist schematisch der Schwenkweg 172 des Prüfelements 52 über der Zeit ausgehend von der Referenzposition 150 gezeigt. In dem Beschleunigungsbereich 152 steigt der Schwenkwinkel ausgehend von seiner Referenzstellung (Nullstellung) nichtlinear an und im Bereich 154 steigt der Schwenkwinkel im wesentlichen aufgrund der konstanten Geschwindigkeit linear an. Im Abbremsbereich 156 ist der Anstieg aufgrund der Abbremsung langsamer als linear und geht dann schließlich im Überwachungsbereich in einen weiteren linearen Anstieg über, der allerdings langsamer ist als in dem Bereich 154. Ist beim Schwenkwinkel 174 der Körper erreicht, dann ändert sich dieser Schwenkwinkel zeitlich nicht mehr, so lange die Schwenkrichtung nicht umgekehrt wird. Diese Umkehrung ist mit dem Kurvenstück 176 angedeutet.

Im Falle, daß die Tastnadel 60 nicht an einen Körper anlegt, durchläuft das Prüfelement 52 den ganzen Überwachungsbereich 144 und an dessen Ende 162 kehrt sich die Schwenkbewegung um und der Schwenkwinkel verkleinert sich wieder. Das Wegzeitdiagramm bei dem Rückschwenken verläuft entsprechend, um die Referenzposition 150 wieder zu erreichen.

Durch den digitalen Winkelgeber 38, bei dem es sich um einen Inkrementengeber handelt, läßt sich der Drehwinkel in einem bestimmten Zeitintervall (Zeitinkrement) vorgeben. Dem Mikrocontroller ist dadurch jederzeit die Schwenkposition des Prüfelements 52 bekannt sowie zumindest näherungsweise die momentane Geschwindigkeit als Differentialquotient zwischen entsprechenden Wegintervallen und Zeitintervallen. Über den Motorstrom läßt sich das Drehmoment bestimmen.

Vorgegebene Steuerungs- und Regelungskurven für Position, Geschwindigkeit und Drehmoment lassen sich beispielsweise in diskreter Form in Tabellen in dem Speicher 100 speichern. Der Mikrocontroller 90 vergleicht die tatsächlichen Werte mit den gespeicherten Werten. Bei Abweichungen davon wird der Motortreiber 102 entsprechend so gesteuert und geregelt, daß die Schwenkbewegung des Prüfelements 52 dicht beim vorgebbaren Kurvenverlauf liegt. Die in Figur 5 und 6 gezeigten Kurvenverläufe entsprechen diesen in Tabellenform vorgegebenen Kurvenverläufen, d. h. sie stellen die Regelgrößen dar.

## Patentansprüche

1. Überwachungseinrichtung zur Überprüfung einer vorbestimmten Position eines Körpers oder zur Überprüfung der Anwesenheit eines Körpers, umfassend ein schwenkbar angeordnetes Prüfelement (52), einen Motor (20) zum Antrieb des Prüfelements (52) und eine Steuereinrichtung (50) zur Steuerung und Regelung der Schwenkbewegung des Prüfelements (52),
**dadurch gekennzeichnet**, daß das Prüfelement ausgehend von einer Ausgangsposition (150) durch einen Durchgangsbereich (142) in einen Überwachungsbereich (144), in welchem die vorbestimmte Position des Körpers liegt oder in dem die Anwesenheit eines Körpers überwacht werden soll, schwenkbar ist und daß die Steuereinrichtung (50) das Drehmoment des Prüfelements (52) so begrenzt, daß das maximal mögliche Drehmoment im Überwachungsbereich (144) gegenüber dem Durchgangsbereich (142) abgesenkt ist.

2. Überwachungseinrichtung nach Anspruch 1, dadurch gekennzeichnet, daß der Motor (20) ein Gleichstrommotor ist und durch die Steuereinrichtung (50) die Stromzufuhr zum Motor (20) begrenzbar ist.

3. Überwachungseinrichtung nach Anspruch 1 oder 2, dadurch gekennzeichnet, daß die Steuereinrichtung (50) die Schwenkbewegung des Prüfelements (52) über eine kombinierte Positions-, Geschwindigkeits- und Drehmomenten-Steuerung und -Regelung kontrolliert.

4. Überwachungseinrichtung nach einem der vorangehenden Ansprüche, dadurch gekennzeichnet, daß beim Übergang des Prüfelements (52) vom Durchgangsbereich (142) in den Überwachungsbereich (144) dessen Geschwindigkeit erniedrigbar ist.

5. Überwachungseinrichtung nach Anspruch 4, dadurch gekennzeichnet, daß die Absenkung der Drehmomentbegrenzung nach Erniedrigung der Geschwindigkeit des Prüfelements (52) erfolgt.

6. Überwachungseinrichtung nach einem der vorangehenden Ansprüche, dadurch gekennzeichnet, daß die Steuereinrichtung (50) einen digitalen Winkelgeber (38) umfaßt.

7. Überwachungseinrichtung nach einem der vorangehenden Ansprüche, dadurch gekennzeichnet, daß der Durchgangsbereich (142) einen Beschleunigungsbereich (152) umfaßt, in dem ausgehend von der Ausgangsposition (150) die Geschwindigkeit des Prüfelements (52) erhöht wird.

8. Überwachungseinrichtung nach einem der vorangehenden Ansprüche, dadurch gekennzeichnet, daß der Durchgangsbereich (142) einen Abbremsbereich (156) umfaßt, in dem die Geschwindigkeit des Prüfelements (52) erniedrigt wird.

9. Überwachungseinrichtung nach einem der vorangehenden Ansprüche, dadurch gekennzeichnet, daß zwischen einem Beschleunigungsbereich (152) und einem Abbremsbereich (156) des Durchgangsbereiches (142) die Geschwindigkeit des Prüfelements (52) im wesentlichen konstant gehalten ist.

10. Überwachungseinrichtung nach einem der vorangehenden Ansprüche, dadurch gekennzeichnet, daß die Geschwindigkeit des Prüfelements (52) im Überwachungsbereich (144) im wesentlichen konstant gehalten ist.

11. Überwachungseinrichtung nach einem der vorangehenden Ansprüche, dadurch gekennzeichnet, daß die Steuereinrichtung (50) Geschwindigkeit und Drehmoment über die zeitabhängige Steuerung und Regelung der Position des Prüfelements (52) durchführt.

12. Überwachungseinrichtung nach Anspruch 11, dadurch gekennzeichnet, daß die Steuereinrichtung (50) die Schwenkposition des Prüfelements (52) vorgibt.

13. Überwachungseinrichtung nach Anspruch 11 oder 12, dadurch gekennzeichnet, daß die Steuereinrichtung (50) die Schwenkgeschwindigkeit des Prüfelements (52) vorgibt.

14. Überwachungseinrichtung nach einem der Ansprüche 11 bis 13, dadurch gekennzeichnet, daß die Steuereinrichtung (50) Schwenkposition und Schwenkgeschwindigkeit des Prüfelements (52) vorgibt.

15. Überwachungseinrichtung nach einem der vorangehenden Ansprüche, dadurch gekennzeichnet, daß durch die Steuereinrichtung (50) ein Lernzyklus zur Ermittlung des Überwachungsbereiches (144) durchführbar ist.

16. Überwachungseinrichtung nach Anspruch 15, dadurch gekennzeichnet, daß durch die Steuereinrichtung (50) der Überwachungsbereich (144) so eingestellt ist, daß er um einen bestimmten Winkelbetrag vor einer im Lernzyklus detektierten Position des Körpers beginnt.

17. Überwachungseinrichtung nach einem der vorangehenden Ansprüche, dadurch gekennzeichnet, daß Anschlagmittel (28, 34) vorgesehen sind, mittels denen die Schwenkbewegung des Prüfelements (52) begrenzbar ist.

18. Überwachungseinrichtung nach Anspruch 17, dadurch gekennzeichnet, daß zum Setzen einer Referenzposition (150) des Prüfelements (52) dieses mit vorgegebener Geschwindigkeit in eine Anschlagposition gefahren wird, bei der korrespondierende Anschlagmittel (28, 34) sich berühren.

19. Überwachungseinrichtung nach Anspruch 18, dadurch gekennzeichnet, daß zur Definition der Referenzposition (150) des Prüfelements (52) in der Anschlagposition mit geringem Drehmoment korrespondierende Anschlagmittel (28, 34) gegeneinander gedreht werden.

20. Überwachungseinrichtung nach einem der vorangehenden Ansprüche, dadurch gekennzeichnet, daß zwischen dem Prüfelement (52) und einem Gehäuse (12) zur Aufnahme des Motors (20) um eine Drehwelle (22), mittels welchem das Prüfelement (52) angetrieben ist, eine Dichtung (68) angeordnet ist.

21. Überwachungseinrichtung nach Anspruch 20, dadurch gekennzeichnet, daß die Dichtung (68) an dem Prüfelement (52) anliegt und an dem Gehäuse (12) anliegt.

22. Überwachungseinrichtung nach Anspruch 20 oder 21, dadurch gekennzeichnet, daß die Dichtung (68) symmetrisch um eine Achse (24) ausgebildet ist.

23. Überwachungseinrichtung nach einem der Ansprüche 20 bis 22, dadurch gekennzeichnet, daß die Dichtung (68) koaxial zur Welle (22) zwischen dem Prüfelement (52) und dem Gehäuse (12) sitzt.

24. Überwachungseinrichtung nach einem der Ansprüche 20 bis 23, dadurch gekennzeichnet, daß zwischen Welle (22) und Dichtung (68) ein Zwischenraum (69) gebildet ist.

25. Überwachungseinrichtung nach einem der Ansprüche 20 bis 24, dadurch gekennzeichnet, daß die Dichtung (68) drehfest gegenüber dem Prüfelement (52) fixierbar ist.

26. Überwachungseinrichtung nach Anspruch 25, dadurch gekennzeichnet, daß das Prüfelement (52) ein Halteelement (64) für die Dichtung (68) aufweist, auf das diese aufschiebbar ist, um sie drehfest an dem Prüfelement (52) zu fixieren.

27. Überwachungseinrichtung nach Anspruch 26, dadurch gekennzeichnet, daß das Halteelement (64) durch einen Haltering gebildet ist, durch welchen die Welle (22) geführt ist und auf den die Dichtung (68) aufschiebbar ist.

28. Überwachungseinrichtung nach Anspruch 26 oder 27, dadurch gekennzeichnet, daß zwischen dem Halteelement (64) und dem Prüfelement (52) eine ringförmige Ausnehmung (66) zur Aufnahme der Dichtung (68) gebildet ist.

29. Überwachungseinrichtung nach einem der Ansprüche 20 bis 28, dadurch gekennzeichnet, daß ein Außendurchmesser der Dichtung (68) im wesentlichen dem Durchmesser des Prüfelements (52) entspricht.

30. Überwachungseinrichtung nach einem der Ansprüche 20 bis 29, dadurch gekennzeichnet, daß die Dichtung (68) eine Ringmanschette (70) zum Aufschieben auf das Prüfelement (52) umfaßt.

31. Überwachungseinrichtung nach einem der Ansprüche 20 bis 30, dadurch gekennzeichnet, daß die Dichtung (68) eine Manschette (72) mit einer V-förmigen Dichtlippe (74) umfaßt, welche am Gehäuse (12) anliegt.

32. Überwachungseinrichtung nach Anspruch 31, dadurch gekennzeichnet, daß die Manschette (72) mit dem Prüfelement (52) relativ zum Gehäuse (52) drehbar ist.

33. Überwachungseinrichtung nach Anspruch 31 oder 32, dadurch gekennzeichnet, daß die Manschette (72) eine zumindest bei fehlender Kraftbeaufschlagung in axialer Richtung im wesentlichen kegelstumpfförmige Außenfläche (78) aufweist.

34. Überwachungseinrichtung nach Anspruch 33, dadurch gekennzeichnet, daß eine gedachte Kegelspitze der Manschette (72) zum Prüfelement (52) hin weist.

35. Überwachungseinrichtung nach Anspruch 33 oder 34, dadurch gekennzeichnet, daß die Manschette (70) eine zumindest bei fehlender Kraftbeaufschlagung in axialer Richtung kegelstumpfförmige Innenfläche (80) aufweist.

36. Überwachungseinrichtung nach einem der Ansprüche 31 bis 35, dadurch gekennzeichnet, daß eine axiale Höhe der Dichtung (68) über die Manschette (70) variierbar ist.
